# EUROPEAN PATENT APPLICATION

(11) **EP 3 599 257 A1**
(43) Date of publication of application: **29.01.2020**
(21) Application number: 19188155.6
(22) Date of filing: 24.07.2019
(51) Int. Cl.: C08J 7/04

(54) **A METHOD TO OBTAIN A STRUCTURED, WATERPROOFED OBJECT IN POLYSTYRENE, PREFERABLY A SEED-BED**

(30) Priority: 25.07.2018 IT 201800007504
(71) Applicant: Salvadori, Fabio, 56034 Casciana Terme (IT); Zappelli, Luca, 00138 Roma (IT); Pedani, Lapo, 50133 Firenze (IT)
(72) Inventor: Salvadori, Fabio, 56034 Casciana Terme (IT); Zappelli, Luca, 00138 Roma (IT); Pedani, Lapo, 50133 Firenze (IT)
(74) Representative: Emmi, Mario

(57) **Abstract**

The present invention relates to an object made of polystyrene covered at least in part by a covering layer.

According to the invention, said covering layer is in the form of a waterproof non-polyurethane varnish.

## Description

### Technical field

The present invention relates to the technical field of objects in general made of polystyrene.

In particular, the invention is directed to an innovative object made of polystyrene covered so as to be reusable, waterproof and then washable, more durable and functional.

### Brief outline of the prior art

Object made of polystyrene have long been known. Nowadays many objects are produced and intended for various different product fields.

For example, the so-called seed-bed are known and produced.

A seed-bed is a box-shaped element which forms in its thickness some recesses suitable for housing soil. By inserting soil and seeds into the recesses, the seedling begins to sprout. In this way, small seedling can grow and they can be sold afterwards, by directly selling the seed-bed which contains them. Then the buyer can plant them out in the designated place.

The advantage of a seed-bed made of polystyrene is obviously the lightness, the low cost and the productive easiness thereof.

All these advantages belong and derive from the use of polystyrene and therefore are valid also for other objects in general made of said material.

For example, box for fruit and/or food products are known which are made of polystyrene instead of common and well-known wood.

In this case too, as mentioned above, the advantages derive from the lightness of the material, low cost, easiness of production and heat capacity thereof, in particular thermal insulation.

It is also known the publication EP2346374 which describes the production of a decor item and a piece of furniture through machine tools by starting from a block of polystyrene which is machined through machine tools and the subsequent covering, for example by spraying, through polyurethane material. In this innovative manner, the item acquires high mechanical features together with the lightness obtained through the use of a core made of polystyrene.

In this case, the covered object acquires important mechanical features so that, for example, a chair made of polystyrene is resistant to a user's weight exactly as a normal chair made of metallic alloy. Polyurethane realizes also a covering protecting from humidity. In order to improve the mechanical features of resistance, the thickness of the polyurethane cover is variable from 1 mm to more than 10 cm, depending on needs.

Nevertheless, such a high mechanical resistance is not necessary on many commonly used objects, when instead it is more important to confer washability and protection from water and humidity.

Even if polyurethane can also perform these functions, it is nevertheless a mainly structural, particularly expensive material and not easy to supply.

Therefore, in many cases, it is necessary that the object of polystyrene is particularly resistant to humidity, thus being at the same time washable and reusable and with improved mechanical features but not so high as those described in EP2346374 and obtained through the spraying of polyurethane.

At the moment, there are no suitable solutions to these needs.

Commonly used objects, such as seed-beds or boxes for fish products, even if they are made of high-density polystyrene, are not suitably protected by humidity and they are not washable and reusable for many times. Liquids derived from food products carried in a polystyrene box often seep through the micro-porosities formed by spheres of polystyrene and even after washing, the box would be dirty, contaminated and smelly, also risking to contaminate new products it carries. A typical example are polystyrene boxes used for carrying octopuses and cuttlefishes. It is noted that they are blotted by black ink and, even after washing them, boxes are not clean and above all are very smelly.

### Summary of the invention

Therefore, the aim of the present invention is to provide a new object made of polystyrene, and relative method of production thereof, which enables to resolve said technical disadvantages at least in part.

In particular, the aim of the present invention is to provide a new object made of polystyrene, and relative method of production thereof, such as a seed-bed, a box for carrying food, a covering panel in building field, which is capable of mostly protect the object from water/humidity by making it washable and reusable, with moderate costs and with an easily feasible proceeding.

Moreover, the aim of the present invention is to provide a new object made of polystyrene and relative method of production thereof, which confers to the object made of polystyrene a minimum increase of structural resistance with no need of polyurethane coverings.

These and other aims are therefore achieved with the present object in general, according to claim 1.

This object is made of polystyrene and it is covered at least in part by a layer of material.

According to the invention, said layer of covering is in the form of a waterproof non-polyurethane varnish.

In this manner, all said technical disadvantages are readily resolved.

Varnish, such as water-based bicomponent or epoxy varnish, is distributed by creating a thin protective thickness which waterproofs wholly and efficaciously the object, thus making it water-resistant, washable and conferring a minimum improvement of the structural qualities thereof.

Therefore, no coverings of polyurethane material are necessary which would confer higher structural features but not necessary for the purposes, so that they would complicate the process of production. Once solidified, the said varnish confers a minimum structural resistance sufficient for the predetermined purposes.

Advantageously, said varnish can be a water-based bicomponent varnish.

Advantageously, said varnish can be for example water epoxy or water and amine epoxy varnish.

Advantageously, in all the above-mentioned embodiments the thickness of said varnish is lower than 1 mm.

Advantageously, preferably, said thickness can be lower than 0,1 mm.

Even more preferably, the thickness can be lower than 0,01 mm.

Even more preferably, the thickness can be lower than 0,001 mm.

In this manner, there is a remarkable saving of material, thus reducing production costs and anyway reaching the required targets in optimal manner.

Advantageously, said object can be selected from one or more of the following ones:
- A seed-bed;
- A box for carrying food;
- A panel for underfloor heating;
- A covering panel in building field.

Advantageously, in the case that said object is a seed-bed, this seed-bed comprises a plurality of recesses (5) .

Advantageously, the whole seed-bed can be covered by said waterproof varnish.

Advantageously, in all the described embodiments, the varnish can be applied directly in contact with polystyrene without any further layers of further interposed material.

This facilitates the productive easiness, thus reducing productive costs.

Moreover, advantageously, no further layer of material is provided as covering on said layer of varnish.

Substantially, a preferred embodiment provides the application of this varnish directly in contact with polystyrene and with no further covering on it.

It is also described here a method to obtain an object made of polystyrene comprising the operations of:
- Forming the object wholly made of polystyrene according to a predetermined shape;
- Covering at least partially the object with a waterproof non-polyurethane varnish.

Advantageously, said varnish can be selected so as to be a water-based bicomponent varnish or a water epoxy or water and amine epoxy varnish.

Advantageously, said varnish is distributed so as to have a thickness lower than 1 mm, preferably lower than 0,1 mm; more preferably lower than 0,01 mm; even more preferably lower than 0,001 mm.

Advantageously, said varnish is distributed directly in contact on the polystyrene with no further layers of interposed material.

Advantageously, said varnish is not covered by any layers of further material.

### Brief description of the drawings

Additional features and advantages of the present object and relative method of production according to the invention will become apparent from the following description of preferred embodiments thereof, given only by way of non-limiting example, with reference to the attached drawings, wherein:
- Figures from 1 to 3 depict the invention applied for the production of a seed-bed;
- Figures from 4 to 6 refers to the example of production of a box for carrying food, such as fish or fish product in general.

### Description of some preferred embodiments

According to the invention, some preferred embodiments of preferred objects will be described thereinafter, even if the invention is intended for any types of objects which can be made of polystyrene and which can have any function such as containment, transport, etc.

Therefore, the subsequent examples must not be intended as strictly limiting.

### Seed-bed made of polystyrene:

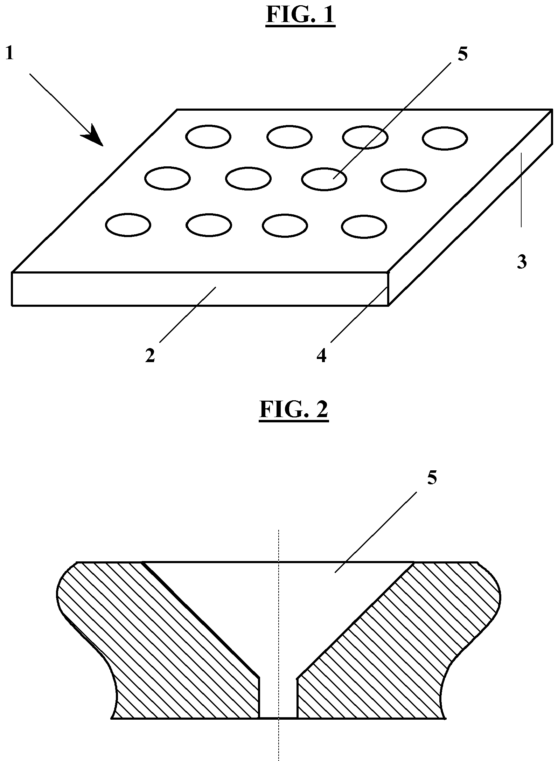

As schematically depicted in figure 1, the seed-bed 1 is in the form of a box-shaped element, for example with a rectangular or square plan shape and a predetermined height. Obviously, other forms can of course be included.

As depicted in figure 1, it will have four sides which define the perimeter and in particular, predetermined length 2, width 3 and height 4. The height 4 confers de facto the thickness of the seed-bed. These recesses 5 are hollowed in the thickness (see for example also section of figure 2) which generally have a hole on the base of the recess for the drainage of water (see section in figure 2).

As well known, recesses serve for containing soil with seeds to enable the seedling to sprout.

The seed bed, according to the invention, is wholly made of polystyrene, for example though machine tools (hot wire, milling cutter, etc.) or produced by moulding.

For example, it is possible to start from a cubic block of polystyrene and machine it through the milling cutter and through rotating drill to obtain the final shape of figure 1, or producing it by moulding or also in part by moulding to finish it through machine tools.

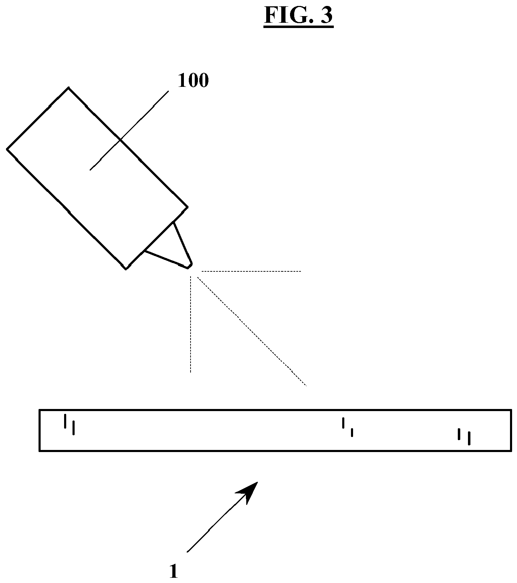

Moreover, as depicted in figure 3, it is provided a phase of covering of the seed-bed through varnish.

The selected varnish is equipped with substantially waterproofing features and substantially it is not polyurethane-based, preferably non-urethane.

The purpose of varnish is to create a waterproofing layer thus making the object washable and conferring a minimum increase of structural resistance.

Varnish can be distributed in various different manner.

For example, a preferred embodiment can provide a process of spraying the varnish, for example by using suitable nozzles 100 (one or more than one).

In a possible embodiment of the invention, it is possible to distribute varnish with a roller or a brush, even automated, even if the spraying obviously enables to reach easily points which would be hardly reachable, such as the bottom of recesses (in the case of a seed-bed indeed) .

Alternatively, a process by immersion such as into a suitable tank could be provided.

The used varnish is preferably a waterproofing water-based bicomponent varnish selected from those commonly available on the market and it is not the specific subject of the present invention per se.

Even more preferably, it is possible to use a water epoxy or water and amine epoxy waterproofing varnish.

Additives can be freely added to it for different colors and dilutions.

Varnish creates a barrier for liquids and therefore they do not penetrate into polystyrene but they remain externally on the protective layer created by it. The final result will be that the seed-bed is washable in efficacious manner since all the dirt is not absorbed and slips onto the varnish. Obviously, the advantage is for hygiene.

Varnish, once solidified, also creates a rigid layer which, even having a rather thin thickness (for example, < 1 mm; preferably, < 0,1 mm; more preferably, < 0,01 mm; even more preferably < 0,001 mm, or even less, to an almost imperceptible thickness, for example in the order of microns), will contribute to a stiffness of the seed-bed itself, thus improving the mechanical features and the duration thereof, conferring protection against atmospheric and chemical agents in general.

Depending on the color of the selected varnish, it is possible to choose a reflecting varnish or a varnish which opacifies light in order to obtain a better and more rapid grow of the seedling (the opacifying varnish serves - above all for the hydroponic system - for protecting roots from light).

For example, for creating color and the effect of desired color, it is also possible to use alumina powder as coloring additive.

### Box for food, in particular for fish products:

The box for food is, as well known, formed by a support plane and by lateral walls which delimits this support plane thus forming a containment volume open above.

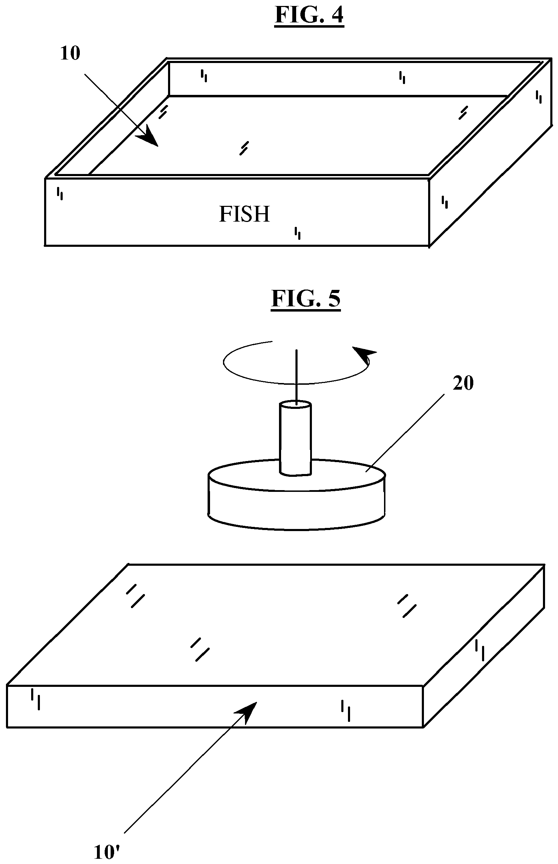

A schematization of the box is for example in figure 4.

It has generally a rectangular-shaped plan but it can be obviously produced of any shapes.

As mentioned, it is open above for enabling to put food to be carried onto the support plane.

According to the invention, it is fully made of polystyrene.

For example, figure 5 depicts a phase of processing through rotating tools which, in this case too, perform the processing by removing chips.

In fact, figure 5 depicts a rotating milling cutter 20 which is lowered onto a polystyrene block 10' in order to obtain the box 10 of figure 4.

Anyway, the preferred processing is moulding also in this case.

Exactly as described for the seed-bed, it is also possible to obtain a box by moulding or by moulding and by finishing the final shape thereof through machine tools.

Always according to the invention, exactly as described for the seed-bed, it is comprised a phase of covering the box with a substantially non-polyurethane, preferably non-urethane varnish, having a substantially waterproofing feature.

Varnish can be distributed in various different manners.

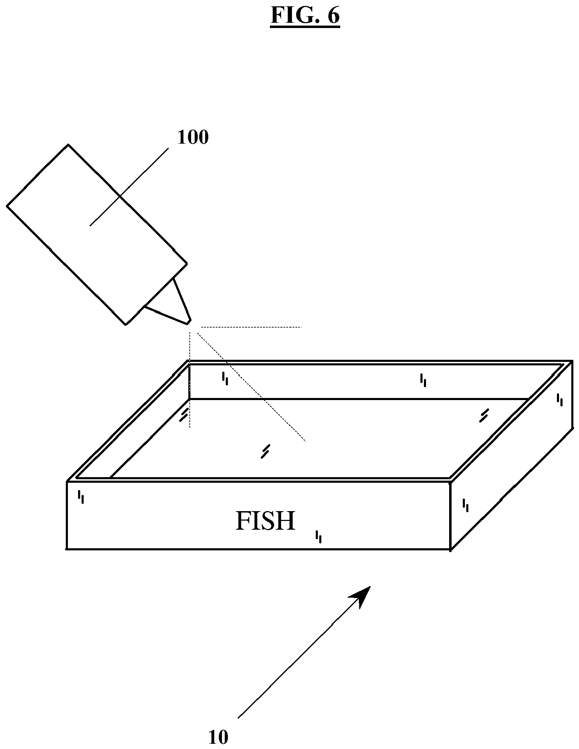

For example, as already described for the seed-bed, a preferred embodiment can provide a process of spraying the varnish, for example by using suitable nozzles 100 (see for example figure 6).

In a possible embodiment of the invention, it is possible to distribute varnish through a roller or an automated brush, even if the spraying can be a faster proceeding in this case.

In this case too, a process by immersion into a suitable tank could be provided.

In this case too, the waterproofing varnish is a water-based bicomponent varnish of those commonly available on the market and it is not the specific subject of the present invention per se.

Even more preferably, it is possible to use a water epoxy or water and amine epoxy waterproofing varnish.

Additives can be freely added to it for different colors and dilutions.

In this case too, the thickness of varnish is rather thin thickness (for example, < 1 mm; preferably, < 0,1 mm; more preferably, < 0,01 mm; even more preferably < 0,001 mm, or even less, to an almost imperceptible thickness, for example in the order of few microns).

Varnish creates a barrier for liquids and therefore they do not penetrate into polystyrene. The final result will be that the seed-bed is washable in efficacious manner, with advantage for hygiene, and it will be more long-lasting.

Also, in the case of use of the box for carrying fish products such as octopuses and cuttlefishes, it can be washed in efficacious manner, thus enabling to reuse the box even for carrying different food product, without any contaminations.

Varnish, once solidified, obviously creates a rigid layer which, even having a rather thin thickness (thin thickness means thicknesses under 1 mm), will contribute to the stiffness of the box itself thus improving the mechanical features thereof.

In this case too, depending on the selected color of varnish, it will be possible to choose a varnish reflecting light.

### Heating underfloor panels, such as modular ones:

Nowadays many types of heating floorings exist, even modular ones, in which pipes with circulating hot fluid pass, so that heat dissipates toward the walkable flooring.

For this purpose, among various components that can form a heating flooring, polystyrene panels coupled with high-density moulded elements, are now used on which ducts which radiate heat and which are arranged foldaway under the walkable flooring.

The coupling to high-density moulded elements prevents condensate from spreading downwards.

In this manner, heat does not scatter downwards by means of polystyrene and is mainly radiated upwards and therefore towards the walkable area.

The above-described technology with reference to seed-beds and boxes for carrying food-products can also equally be extended and applied to such polystyrene panels for realizing underfloor heating.

Anyway, it is clear from the whole description that the present invention enables to produce any objects by starting from a processing of polystyrene thereof and then covering polystyrene with a suitable thin layer (as described above) of a suitable waterproofing varnish, substantially non-polyurethane-based.

Other possible applications, that can include all the above-described features, can concern smooth or preformed panels made of polystyrene for roofs in order to:
- Waterproof the roof and make at least a side thereof reflecting through a suitable pigment;
- Making the surface suitable for the adhesion of a waterproofing sheath.

Even covering panels in building field can be produced.

As already described previously, in all the described embodiments, the used varnish is not a polyurethane-based varnish and the distributed varnish is in the order of thickness under 1 millimeter; preferably, < 0,1 mm; more preferably, < 0,01 mm; even more preferably < 0,001 mm, but also less, to an almost imperceptible thickness, for example in the order of few microns).

In all the embodiments of the invention, preferably, the layer of varnish which is distributed is directly applied onto the material made of polystyrene constituting the object and therefore with no further layers of material interposed between them.

Moreover, the same varnish is not in turn covered by further layers of another material.

In this manner, it is obtained a low-cost object which owns all the necessary features of impermeability/washability/stiffness.

In general, in all the embodiments, moulding means, in the case of polystyrene, the injection of pre-expanded spheres inside a mould; afterwards vapour will be injected inside the mould for enabling the spheres to finish the expansion (which is developed from an expanding product contained inside the spheres) and to stick plastically with one another. Finally, through the creation of vacuum, vapour is extracted and the process of moulding is finished (only the extraction of the item from the mould is missing).

## Claims

1. An object made of polystyrene covered at least in part by a covering layer, **characterized by the fact that** said object is wholly made of polystyrene and said covering layer is in the form of a waterproof non-polyurethane varnish, the varnish being applied directly in contact on the polystyrene without any further layer of material interposed between them.

2. The object, according to claim 1, wherein said varnish is a water-based bicomponent varnish.

3. The object, according to claim 1 or 2, wherein said varnish is water epoxy varnish or water and amine epoxy varnish.

4. The object, according to one or more of the preceding claims, wherein the thickness of said varnish is lower than 1 mm.

5. The object, according to one or more of the preceding claims from 1 to 4, wherein said thickness is lower than 0,1 mm.

6. The object, according to one or more of the preceding claims from 1 to 5, wherein said thickness is lower than 0,01 mm.

7. The object, according to one or more of the preceding claims from 1 to 6, wherein said thickness is lower than 0,001 mm.

8. The object, according to one or more of the preceding claims, wherein said object can be selected from:
- A seed-bed;
- A box for carrying food;
- A panel for underfloor heating;
- A covering panel in building field.

9. The object, according to one or more of the preceding claims, wherein, in the case that said object is a seed-bed, it comprises a plurality of recesses (5) and the whole seed-bed is covered by said waterproof varnish.

10. An object, according to one or more of the preceding claims, wherein no further layer of material is arranged as covering on said waterproof varnish layer.

11. A method for obtaining an object made of polystyrene comprising the operations of:
- Forming the object wholly made of polystyrene according to a predetermined shape;
- Covering at least partially the object through a waterproof non-polyurethane varnish.

12. A method, according to claim 11, wherein said varnish is selected so as to be a water-based bicomponent varnish or a water epoxy or water and amine epoxy varnish.

13. A method, according to claim 11 or 12, wherein said varnish is distributed so that the thickness thereof is lower than 1 mm, preferably lower than 0,1 mm, more preferably lower than 0,01 mm, even more preferably lower than 0,001 mm.

14. A method, according to one or more of the preceding claims from 11 to 13, wherein the varnish is applied directly in contact on the polystyrene with no further layer of material interposed between them.

15. A method, according to one or more of the preceding claims from 11 to 14, wherein no further layer of material is arranged as covering on the said layer of varnish.
